# EUROPÄISCHE PATENTANMELDUNG

(11) **EP 4 147 615 A1**
(43) Veröffentlichungstag der Anmeldung: **15.03.2023**
(21) Anmeldenummer: 21195957.2
(22) Anmeldetag: 10.09.2021
(51) Int. Cl.: A47J 36/32, A47J 27/00, A47J 27/21, A47J 27/56, A47J 43/07

(54) **VERFAHREN ZUM ZUBEREITEN EINER SPEISE NEBST KÜCHENMASCHINE**

(71) Anmelder: Vorwerk & Co. Interholding GmbH, 42270 Wuppertal (DE)
(72) Erfinder: Kraut-Reinkober, Stefan, 51375 Leverkusen (DE); Feckler, Gereon, 41542 Dormagen (DE); Merta, Andreas, 42489 Wülfrath (DE); Yan, Wenjie, 40549 Düsseldorf (DE)
(74) Vertreter: Gille Hrabal Partnerschaftsgesellschaft mbB Patentanwälte

(57) **Zusammenfassung**

Die Erfindung betrifft ein Verfahren, ein Computerprogrammprodukt und eine Küchenmaschine zum Zubereiten einer Speise (20) in einem Topf (2) mithilfe einer Küchenmaschine (1), die den Topf (2), ein Heizelement (3) zum Erhitzen des Topfes (2) und/oder einer Speise (20) in dem Topf (2) und einen Temperatursensor (4) zum Ermitteln einer Ist-Temperatur (T_{I}) des Topfes (2) oder der Speise (20) in dem Topf (2) umfasst, mit folgenden Schritten: Durchführen einer Temperaturregelung durch eine Steuerungseinrichtung (10) in einem Temperaturregelungs-Modus auf Basis einer Soll-Temperatur (T_{T}) durch ein Einstellen einer dem Heizelement (3) zugeführten, elektrischen Energie in Abhängigkeit von der Ist-Temperatur (T_{I}), so dass sich die Ist-Temperatur (T_{I}) der Soll-Temperatur (T_{T}) annähert oder die Soll-Temperatur (T_{T}) erreicht. Das Verfahren weist ferner die folgenden Schritte auf: Detektieren eines festgelegten Siede-Stadiums der Speise (20) durch eine Siede-Erkennungseinheit (14); und Wechseln von dem Temperaturregelungs-Modus in einen Fest-Modus der Steuerungseinrichtung (10), wenn die Siede-Erkennungseinheit (14) das festgelegte Siede-Stadium detektiert, wobei die dem Heizelement (3) zugeführte, elektrische Energie in dem Fest-Modus auf einen festgelegten Wert (P₁, P₂, P₃) gehalten wird. Ein reproduzierbares Kochergebnis kann auf diese Weise zuverlässig mit einem wenig komplexen System ermöglicht werden.

## Beschreibung

Die Erfindung betrifft ein Verfahren zum Zubereiten einer Speise in einem Topf mithilfe einer Küchenmaschine mit Temperaturregelung und einer Siede-Erkennungseinheit, eine entsprechende Küchenmaschine sowie ein entsprechendes Computerprogrammprodukt.

Das Kochverhalten ist abhängig von der Messgenauigkeit des Temperatursensors und den Umweltbedingungen, z.B. geographische Höhe, Füllstand des Mediums im Topf und der Güte der Mischung durch zum Beispiel Rühren. Das Regeln auf eine Zieltemperatur während des Siedevorgangs birgt im Grundsatz die Diskrepanz, dass die Siedetemperatur durch die physikalischen Eigenschaften des Mediums und der vorliegenden Umgebungsbedingungen festgelegt ist. Die Regelung kann also ihre Zielgröße unter bestimmten Umständen gar nicht erreichen. Je nach Regelungsalgorithmus für die Temperatur stellt sie dadurch eine undefinierte Heizleistung ein, die dann zu variierenden, teils nicht-reproduzierbaren Kochergebnissen führt.

Die vorgenannten, aus dem Stand der Technik bekannten Merkmale können einzeln oder in beliebiger Kombination mit einem der nachfolgend beschriebenen erfindungsgemäßen Gegenstände und Ausführungsformen kombiniert werden.

Es ist Aufgabe der Erfindung, ein weiterentwickeltes Verfahren nebst Küchenmaschine bereitzustellen.

Zur Lösung der Aufgabe dienen ein Verfahren gemäß dem Hauptanspruch sowie eine Küchenmaschine und ein Computerprogrammprodukt gemäß den Nebenansprüchen. Vorteilhafte Ausführungsformen ergeben sich aus den Unteransprüchen.

Zur Lösung der Aufgabe dient ein Verfahren zum Zubereiten einer Speise in einem Topf insbesondere mithilfe einer Küchenmaschine, die den Topf, ein Heizelement zum Erhitzen des Topfes und/oder einer Speise in dem Topf und einen Temperatursensor zum Ermitteln einer Ist-Temperatur des Topfes und/oder der Speise in dem Topf umfasst. Das Verfahren umfasst bevorzugt folgenden Schritt: Durchführen einer Temperaturregelung, insbesondere durch eine Steuerungseinrichtung, in einem Temperaturregelungs-Modus auf Basis einer Soll-Temperatur durch ein Einstellen einer dem Heizelement zugeführten, elektrischen Energie in Abhängigkeit von der Ist-Temperatur, so dass sich die Ist-Temperatur der Soll-Temperatur annähert oder die Soll-Temperatur erreicht. Das Verfahren weist bevorzugt folgenden Schritt auf: Detektieren eines festgelegten Siede-Stadiums der Speise durch eine Siede-Erkennungseinheit. Das Verfahren umfasst folgenden Schritt: Wechseln, insbesondere von dem Temperaturregelungs-Modus, in einen Fest-Modus der Steuerungseinrichtung, vorzugsweise wenn die Siede-Erkennungseinheit das festgelegte Siede-Stadium detektiert, wobei die dem Heizelement zugeführte, elektrische Energie in dem Fest-Modus auf einen festgelegten Wert gehalten wird. Insbesondere hängt der festgelegte Wert von der Soll-Temperatur, einer Benutzereingabe, einem digitalen Rezept oder einem Rezeptschritt eines digitalen Rezepts ab.

Ein reproduzierbares Kochergebnis kann auf diese Weise besonders zuverlässig mit einem System erzielt werden, dass eine reduzierte Komplexität aufweist.

Der Erfindung liegt die Erkenntnis zugrunde, dass für ein zuverlässiges Erzielen eines reproduzierbaren Kochergebnisses vorübergehende Abweichungen und geringe Abweichungen von einem gewünschten Zustand der Speise die Reproduzierbarkeit des Kochergebnisses widererwartend kaum beeinträchtigen. Bisher zeichneten sich Verfahren und Küchenmaschinen, die das Ziel eines zuverlässigen Erzielens eines reproduzierbaren Kochergebnisses verfolgten, durch eine sehr komplexe Steuerung aus, um während des gesamten Speisenzubereitungsvorgangs möglichst jede Abweichung von einem zeitaufgelösten Planzustand zu erkennen und zu korrigieren.

Im Gegensatz hierzu wird vorliegend insbesondere im Bereich des Siede-Stadiums der Speise mit einer konstanten, dem Heizelement zugeführten elektrischen Energie gearbeitet. Tests haben gezeigt, dass Einflussgrößen wie z.B. Füllmengen oder Güte der Mischung durch zum Beispiel Rühren keinen wesentlichen Einfluss auf die Reproduzierbarkeit des Kochergebnisses haben, wenn ab dem Erkennen des festgelegten Siede-Stadiums ein fester, insbesondere vordefinierter Wert für die dem Heizelement zugeführten elektrischen Energie angewendet wird.

Wenn in einer Ausgestaltung ein Benutzer oder ein digitales Rezept eine Soll-Temperatur von 95°C oder 98°C - alternativ zwischen 95°C und 99°C - vorgeben mit der Erwartung, einen leise siedenden Zustand des Wassers in dem Topf mit leichter Dampfbildung, aber noch ohne (nennenswerte) Blasenbildung, zu erhalten, kann dieser Zustand des Wassers bzw. der Speise im Wesentlichen unabhängig von der Höhe über dem Meeresspiegel und im Wesentlichen unabhängig vom Füllgrad des Topfes mit einem vordefinierten, konstanten ersten Wert der elektrischen Energie oder Leistung erreicht werden, z.B. 100 Watt. Gleiches gilt, wenn in einer alternativen Ausgestaltung der Benutzer eine entsprechende Benutzereingabe mit einem entsprechend gewünschten Siede-Stadium, z.B. Sieden kurz vor Dampfblasenbildung, über die Benutzerschnittstelle der Küchenmaschine vornimmt oder dies durch ein digitales Rezept oder einen Rezeptschritt eines digitalen Rezepts vorgegeben wird.

Wenn in einer Ausgestaltung ein Benutzer oder ein digitales Rezept eine Soll-Temperatur von 100°C - alternativ zwischen 100°C und 104°C - vorgeben mit der Erwartung, einen siedenden Zustand des Wassers in dem Topf mit gewohnter, normaler Dampfbildung und Blasenbildung von kochendem Wasser zu erhalten, kann dieser Zustand des Wassers bzw. der Speise ebenfalls im Wesentlichen unabhängig von den oben genannten Einflussgrößen mit einem vordefinierten, konstanten zweiten Wert der elektrischen Energie oder Leistung erreicht werden, z.B. 300 Watt, der größer als der erste Wert ist. Gleiches gilt, wenn in einer alternativen Ausgestaltung der Benutzer eine entsprechende Benutzereingabe mit einem entsprechend gewünschten Siede-Stadium, z.B. normales Kochen mit regelmäßiger Dampfblasenbildung, über die Benutzerschnittstelle der Küchenmaschine vornimmt oder dies durch ein digitales Rezept oder ein Rezeptschritt eines digitalen Rezepts vorgegeben wird.

Wenn in einer Ausgestaltung ein Benutzer oder ein digitales Rezept eine Soll-Temperatur von 105°C oder größer vorgeben mit der Erwartung, einen stark kochenden Zustand des Wassers in dem Topf mit übermäßig starker Dampfbildung und übermäßig starker Blasenbildung zu erhalten, kann dieser Zustand des Wassers bzw. der Speise ebenfalls im Wesentlichen unabhängig von den oben genannten Einflussgrößen mit einem vordefinierten, konstanten dritten Wert der elektrischen Energie oder Leistung erreicht werden, z.B. 400 Watt, der größer als der zweite Wert ist, insbesondere jedoch kleiner als eine maximal mögliche elektrischen Energie oder Leistung. Gleiches gilt, wenn in einer alternativen Ausgestaltung der Benutzer eine entsprechende Benutzereingabe mit einem entsprechend gewünschten Siede-Stadium, z.B. starkes Kochen mit starker Dampfblasenbildung, über die Benutzerschnittstelle der Küchenmaschine vornimmt oder dies durch ein digitales Rezept oder ein Rezeptschritt eines digitalen Rezepts vorgegeben wird.

In einer Ausgestaltung kann der festgelegte Wert für eine konstante, den Heizelement zuzuführende, elektrische Energie oder Leistung, also für eine konstante Hitzeabgabe, anhand einer fest hinterlegten Funktion oder durch Interpolation fest hinterlegter Referenzwerte in Abhängigkeit von der Soll-Temperatur T_{T}, die innerhalb eines Siede-Soll-Temperaturbereichen liegt, ermittelt und angewendet werden.

Wie oben erwähnt wurde erkannt, dass für die Reproduzierbarkeit des Kochergebnisses Einflussfaktoren wie z.B. Füllgrad, Höhe über dem Meeresspiegel oder die Speisenzusammensetzung zwar zu einer leichten Temperaturverschiebung verglichen mit der Soll-Temperatur führen können. Diese Einflüsse und Temperaturverschiebung führen am Ende des Speisenzubereitungsvorgangs jedoch widererwartend nicht zu einer für den Benutzer spürbaren Beeinträchtigung des gewünschten, reproduzierbaren Kochergebnisses, das in der Bewertung durch einen durchschnittlichen Benutzer eine gute Qualität aufweist.

Im Gegenteil wird durch den Fest-Modus mit einer festen, konstanten Energie-Zufuhr zum Heizelement ab dem Erkennen des festgelegten Siede-Stadiums die Erwartung des Benutzers an den Zustand des siedenden Wassers bzw. der Speise häufig sogar noch zuverlässiger erfüllt als mit einer Temperaturregelung, die normalerweise in einer Region in besonderer Höhe über dem Meeresspiegel versagt, weil dort der Siedepunkt infolge des geringeren Umgebungsdruckes entsprechend niedriger als 100°C liegt. Um auch bei geringeren Umgebungsdrücken eine herkömmliche Temperaturregelung fehlerfrei umzusetzen, wäre ein Umgebungsdruckmesssensor mit entsprechender Auswertungselektronik und eine Einbeziehung dessen Sensormessungen in die Temperaturregelung erforderlich, also zu einer höheren Komplexität des Systems. Ein weiteres Beispiel ist ein verschmutzter Topf im Bereich des Temperatursensors, was dazu führen kann, dass der Temperatursensor eine stets geringere Temperatur misst, als eigentlich vorliegt. Auch hier kann es zu einem Versagen der herkömmlichen Temperaturregelung kommen, während durch den Fest-Modus der gewünschte Zustand in dem Topf erreicht werden und das gewünschte, reproduzierbare Kochergebnis besonders zuverlässig erzielt werden kann.

In der Ausgestaltung, in der die dem Heizelement zugeführte, elektrische Energie in dem Fest-Modus auf einen festgelegten Wert gehalten wird, der von einer Benutzereingabe abhängt, wird die Benutzereingabe über eine Benutzerschnittstelle insbesondere der Küchenmaschine durch den Benutzer getätigt und/oder an die Steuerungseinrichtung übermittelt. Eine Benutzereingabe kann mithilfe eines Auswahlfeldes, über das der Benutzer einen gewünschten Siede-Stadien aus mehreren - z.B. für ein Sieden kurz vor Dampfblasenbildung, für ein normales Kochen mit regelmäßiger Dampfblasenbildung oder für ein starkes Kochen mit starker Dampfblasenbildung - auswählen kann, umgesetzt werden. Insbesondere kann das Auswahlfeld kann dazu die Siede-Stadien, zwischen denen ausgewählt werden soll, mithilfe von Text und/oder Grafiken beschreiben. In einer Ausgestaltung können die Siede-Stadien, zwischen denen ausgewählt werden soll, jeweils ein digitales Rezept sein, die aus einer Liste von Rezepten ausgewählt werden können.

In der Ausgestaltung, in der die dem Heizelement zugeführte, elektrische Energie in dem Fest-Modus auf einen festgelegten Wert gehalten wird, der von einem digitalen Rezept oder einem Rezeptschritt eines digitalen Rezepts vorgegeben wird, wird diese Vorgabe an die Steuerungseinrichtung übermittelt und/oder von der Steuerungseinrichtung bei der Ausführung eines Rezeptes oder Rezeptschrittes umgesetzt.

Ein weiterer Aspekt der Erfindung betrifft eine Küchenmaschine, die so eingerichtet ist, dass die Küchenmaschine das Verfahren gemäß dem eingangs beschriebenen Verfahren durchführt oder durchführen kann. Eine Küchenmaschine zum Zubereiten einer Speise in einem Topf ist vorgesehen, wobei die Küchenmaschine den Topf, ein Heizelement zum Erhitzen des Topfes und/oder einer Speise in dem Topf und einen Temperatursensor zum Ermitteln einer Ist-Temperatur des Topfes und/oder einer Speise in dem Topf umfasst. Die Küchenmaschine kann ferner ein Werkzeug zum Mischen und/oder Zerkleinern einer Speise in dem Topf umfassen. Eine Steuerungseinrichtung ist so konfiguriert, dass in einem Temperaturregelungs-Modus die Steuerungseinrichtung auf Basis einer Soll-Temperatur durch ein Einstellen einer dem Heizelement zugeführten, elektrischen Energie in Abhängigkeit von der Ist-Temperatur eine Temperaturregelung durchführen kann, damit sich die Ist-Temperatur der Soll-Temperatur annähert oder die Soll-Temperatur erreicht. Die Küchenmaschine weist eine Siede-Erkennungseinheit zum Detektieren eines festgelegten Siede-Stadiums der Speise auf und die Steuerungseinrichtung ist so konfiguriert, dass die Steuerungseinrichtung von dem Temperaturregelungs-Modus in einen Fest-Modus wechselt, wenn die Siede-Erkennungseinheit das festgelegte Siede-Stadium detektiert, wobei die dem Heizelement zugeführte, elektrische Energie in dem Fest-Modus auf einen festgelegten Wert gehalten wird, der von der Soll-Temperatur abhängig ist. Die Definitionen, Ausführungsformen und Wirkungen des eingangs beschriebenen Aspekts der Erfindung sind auch auf diesen Aspekt der Erfindung anwendbar.

Ein weiterer Aspekt der Erfindung betrifft eine Küchenmaschine. Insbesondere ist die Küchenmaschine so eingerichtet, dass die Küchenmaschine das Verfahren gemäß einem der vorhergehenden Ansprüche durchführen kann. Zum Zubereiten einer Speise in einem Topf umfasst die Küchenmaschine den Topf und ein Heizelement zum Erhitzen des Topfes und/oder einer Speise in dem Topf. Die Küchenmaschine weist ferner eine Steuerungseinrichtung, eine Benutzerschnittstelle und einen Temperatursensor zum Ermitteln einer Ist-Temperatur des Topfes oder der Speise in dem Topf auf. Die Steuerungseinrichtung ist so konfiguriert, dass in einem Fest-Modus eine dem Heizelement zugeführte, elektrische Energie auf einem festgelegten Wert gehalten wird, wenn ein Benutzer über eine Benutzerschnittstelle ein Benutzereingabe zur Eingabe eines gewünschten Siede-Stadiums, z.B. für ein Sieden kurz vor Dampfblasenbildung, für ein normales Kochen mit regelmäßiger Dampfblasenbildung oder für ein starkes Kochen mit starker Dampfblasenbildung, tätigt. Mit anderen Worten führt diese Benutzereingabe zu einem Wechsel oder einer Aktivierung des Fest-Modus. Ein reproduzierbares Kochergebnis kann auf diese Weise besonders zuverlässig mit einem System erzielt werden, dass eine reduzierte Komplexität aufweist. Ein gewünschtes Siede-Stadium ist ein gewünschter Siede-Zustand. In einer Ausgestaltung wird die Soll-Temperatur durch das gewünschte Siede-Stadium der Benutzereingabe festgelegt.

Ein weiterer Aspekt der Erfindung betrifft ein Computerprogrammprodukt, umfassend Befehle, die bei der Ausführung des Programms des Computerprogrammprodukts durch einen Prozessor insbesondere einer Steuerungseinrichtung vorzugsweise einer Küchenmaschine diesen veranlassen, die Schritte des Verfahrens gemäß des eingangs beschriebenen Aspekts der Erfindung auszuführen.

Die folgenden Definitionen, Ausführungsformen und Wirkungen betreffen sowohl das Verfahren als auch auf die Küchenmaschine und können auch auf das Computerprogrammprodukt angewendet werden.

Eine Küchenmaschine ist ein Speisenzubereitungsgerät, das eine Speise durch Erhitzen oder Mischen oder Zerkleinern zubereiten kann. Dies kann durch die manuelle Bedienung durch einen Benutzer oder durch die automatische Abarbeitung eines hinterlegten Rezeptes oder einzelner Rezeptschritte erfolgen. Die Siedepunkterkennungseinrichtung der Küchenmaschine kann von der Steuerungseinrichtung der Küchenmaschine umfasst sein. Die Siedepunkterkennungseinrichtung und/oder ein Teil der Steuerungseinrichtung können beispielsweise in eine externe Rechnereinheit (wie z.B. ein Cloud-Computer, Server, Smartphone oder Tablet-PC) ausgelagert sein, die kommunikativ mit der Steuerungseinrichtung der Küchenmaschine verbunden ist. Eine Soll-Temperatur oder die Benutzereingabe für das gewünschte Siedestadium kann beispielsweise durch einen Benutzer über eine Benutzerschnittstelle, die insbesondere von der Küchenmaschine umfasst ist, oder durch ein digitales Rezept vorgegeben werden. Ein digitales Rezept ist ein Datensatz, der mehrere Rezeptschritte definiert. Ein Rezeptschritt kann Steuerbefehle und/oder Kochparameter für eine oder mehrere elektrisch betreibbare Funktionskomponenten der Küchenmaschine umfassen. Diese einzelnen Rezeptschritte werden dann automatisch oder teilautomatisch ausgeführt. Beispielsweise kann ein Rezeptschritt eine Soll-Temperatur vorgeben. Die Steuerungseinrichtung betreibt dann auf Basis der Soll-Temperatur z.B. das Heizelement. Eine dem Heizelement zugeführte, elektrische Energie kann in dem Fest-Modus auf einen festgelegten Wert gehalten werden, indem das Heizelement mit einer konstanten Zielgröße für die zuzuführende Energie angesteuert wird. In einer Ausgestaltung ist eine Leistungsregelung vorgesehen, damit die zugeführte, elektrische Energie zum Heizelement, z.B. eine Ist-Leistung, bestmöglich der Zielgröße, z.B. einer Soll-Leistung, nahekommt oder dieser entspricht. Wenn die Küchenmaschine auch ein Werkzeug zum Mischen und/oder Zerkleinern umfasst, kann die Steuerungseinreichung ebenfalls das Werkzeug steuern. Die Steuerungseinrichtung sendet dann Steuerbefehle und/oder Signale an einen Antrieb, dessen Elektromotor das Werkzeug dreht. Ein Temperatursensor zum Ermitteln einer Ist-Temperatur sendet digitale oder analoge Signale, die mit den gemessenen Temperaturen korrelieren, an die Steuerungseinrichtung. Entweder ermittelt die Steuerungseinrichtung die Ist-Temperatur durch ein Empfangen der Signale des Sensors oder durch ein Empfangen und eine Signalverarbeitung der empfangenen Signale des Sensors.

Ein Siede-Stadium ist ein Zustand einer flüssigen oder wasserhaltigen Speise oder Wasser in dem Topf, bei der durch das Erhitzen durch das Heizelement zumindest teilweise eine Phasenumwandlung von flüssig zu gasförmig erfolgt. Bevorzugt ist das festgelegte Siede-Stadium, das insbesondere mithilfe eines Siede-Stadium-Kriteriums festgelegt wird, das eine oder mehrere Bedingungen umfassen kann, derart festgelegt, dass im festgelegten Siede-Stadium Dampfblasen vom Topfboden an die Oberfläche der flüssigen Speise aufsteigen und dort mit dem menschlichen Ohr hörbar aufplatzen und Dampf freisetzen.

Allgemein bedeutet eine Regelung, dass eine Regelgröße (z.B. Ist-Temperatur T_{I}) und eine Führungsgröße (z.B. Soll-Temperatur T_{T}) in einem Regelkreislauf miteinander Verglichen werden und in Abhängigkeit von der Differenz von der Führungsgröße und der Regelgröße eine Stellgröße (z.B. dem Heizelement zuzuführende, elektrische Energie, insbesondere elektrische Leistung) so eingestellt wird, dass sich die Regelgröße der Führungsgröße annähert.

Bei 100°C, dem sogenannten Siedepunkt beginnt Wasser bei Normaldruck, also ca. 1 bar Umgebungsdruck, zu verdampfen. Die Siedetemperatur ist abhängig von der Höhenlage über dem Meeresspiegel. Je höher über dem Meeresspiegel gekocht wird, desto eher beginnt das Wasser zu sieden. Für die Zubereitung von Speisen wird häufig zwischen sogenanntem "stillen Sieden" und geräuschvollem Sieden, das auch als Kochen (z.B. kochendes Wasser) bezeichnet wird, unterschieden. Wenn eine flüssige Speise erhitzt wird, beginnt zunächst das stille Sieden. Bereits ab ca. 90°C oder 95°C bilden sich am Topfboden kleine Bläschen mit Wasserdampf, die langsam nach oben steigen und an der Oberfläche zerplatzen. Erst wenn die Temperatur im gesamten Topf gleich hoch ist, beginnt das sogenannte Kochen bzw. geräuschvolle Sieden, bei dem die großen Dampfblasen hörbar an der Wasseroberfläche aufplatzen. Empfindliche Speisen wie z.B. in siedendem Wasser erhitzte Würstchen, Knödel, frische Ravioli oder Gnocchi sind im Hinblick auf ein verbessert qualitatives und reproduzierbares Kochergebnis in still siedendem Wasser zuzubereiten. Bei Normaldruck führt bereits eine durchschnittliche Wassertemperatur von 90 °C durch Erhitzung des Topfbodens zu aufsteigenden Luftblasen begleitend mit Dampfausbildung. Bei 95 °C verdampft flüssiges Wasser zunehmend zu Dampf. Bei 100°C verdampft Wasser mit hoher Geschwindigkeit. Speisen wie z.B. Kartoffeln werden im Hinblick auf ein verbessert qualitatives und reproduzierbares Kochergebnis in normal kochendem Wasser und Speisen wie z.B. Rotkohl in stark kochendem Wasser mit hoher Dampfrate gegart.

In einer Ausführungsform des Verfahrens und/oder einer Konfiguration der Steuerungseinrichtung ist vorgesehen, dass geprüft wird, ob die Soll-Temperatur mit einer von mehreren vordefinierten Siede-Soll-Temperaturen übereinstimmt oder in einen vordefinierten Siede-Soll-Temperaturbereich fällt. Ein erwarteter Siede-Zustand der Speise kann auf diese Weise mit einem wenig komplexen System besonders zuverlässig erhalten werden. Insbesondere ist diese Prüfung eine Bedingung eines Siede-Stadium-Kriterium, vorzugsweise eine Und-verknüpfte Bedingung, die in einer Ausgestaltung auf einen oder mehrere Schritte zu Beginn oder während einer Temperaturregelung vorgezogen werden kann. Die Komplexität des Systems kann so weiter reduziert werden.

In einer Ausführungsform des Verfahrens und/oder einer Konfiguration der Steuerungseinrichtung ist vorgesehen, dass eine erste vordefinierte Siede-Soll-Temperatur (z.B. T_{T1}=91°C), die kleiner als 100°C ist, einem ersten Wert (z.B. P₁) für die dem Heizelement zugeführte, elektrische Energie zugeordnet ist. In einer Ausführungsform ist vorgesehen, dass eine zweite vordefinierte Siede-Soll-Temperatur (z.B. T_{T2}=100°C), die größer oder gleich 100°C ist, einem zweiten Wert (z.B. P₂) für die dem Heizelement zugeführte, elektrische Energie zugeordnet ist. In einer Ausführungsform ist vorgesehen, dass eine dritte vordefinierte Siede-Soll-Temperatur (z.B. T_{T3}=105°C), die größer als 100°C ist, einem dritten Wert (z.B. P₃) für die dem Heizelement zugeführte, elektrische Energie zugeordnet ist. In einer Ausführungsform sind mindestens zwei, vorzugsweise mindestens oder genau drei, und/oder höchstens acht, besonders bevorzugt höchstens fünf vordefinierte Werte für die dem Heizelement zugeführte, elektrische Energie einer jeweiligen Siede-Soll-Temperatur oder einem jeweiligen Siede-Soll-Temperaturbereich zugeordnet. Ein erwarteter Siede-Zustand der Speise kann auf diese Weise mit einem wenig komplexen System besonders zuverlässig erhalten werden.

Mit "Wert für die dem Heizelement zugeführte, elektrische Energie" ist ein Parameter zum Steuern des Heizelements gemeint, der eine konstante Heizleistung des Heizelements bewirken soll.

Bevorzugt ist der Wert für die dem Heizelement zugeführte, elektrische Energie zusammen mit der zugeordneten Siede-Soll-Temperatur oder dem Siede-Soll-Temperaturbereich in einem Speicher hinterlegt und/oder fest vordefiniert. Besonders bevorzugt beinhaltet der Wert die elektrische Leistung, mit der das Heizelement versorgt werden soll. Der Parameter ist dann die elektrische Leistung, die mit der Einheit Watt angegeben werden kann, oder ein damit korrelierender digitaler oder analoger Signalwert zum Steuern des Heizelements. Wenn die dem Heizelement zugeführte, elektrische Leistung auf einen Soll-Leistungswert geregelt wird, ist der Wert dieser Soll-Leistungswert. Alternativ kann der Wert auch ein Maß für die Stromstärke sein, die dem Heizelement zugeführt wird und mit der abzugebenden Heizleistung des Heizelements korreliert.

In einer Ausführungsform liegen die mehreren vordefinierten Siede-Soll-Temperaturen nicht unter 95°C. In einer Ausführungsform liegt der vordefinierte Siede-Soll-Temperaturbereich nicht unter 95°C oder liegen die vordefinierten Siede-Soll-Temperaturbereiche nicht unter 95°C. Die Komplexität des Systems kann so weiter reduziert werden.

In einer Ausführungsform des Verfahrens und/oder einer Konfiguration der Steuerungseinrichtung ist vorgesehen, dass geprüft wird, dass die Ist-Temperatur größer als eine vordefinierte Mindesttemperatur und/oder kleiner als eine vordefinierte Höchsttemperatur ist. Ein wenig komplexes System, das besonders zuverlässig ein reproduzierbares Kochergebnis ermöglicht, kann so erhalten werden. Insbesondere ist diese Prüfung eine Bedingung eines Siede-Stadium-Kriterium, insbesondere eine Und-verknüpfte Bedingung, die in einer Ausgestaltung auf einen oder mehrere Schritte während einer Temperaturregelung vorgezogen werden kann. Die Komplexität des Systems kann so weiter reduziert werden.

In einer Ausführungsform beträgt die vordefinierte Mindesttemperatur (T_{Min}) mindestens 80°C und/oder höchstens 91°C oder 93°C, besonders bevorzugt genau 91°C. In einer Ausführungsform ist die vordefinierte Höchsttemperatur (T_{Max}) größer als 105°C oder 110°C und/oder kleiner als 120°C. Besonders bevorzugt beträgt die vordefinierte Höchsttemperatur 110°C. Das System kann auf diese Weise besonders lang in dem Fest-Modus betrieben und Rechenkapazität eingespart werden. Dabei wird eine langsame Reaktionszeit des Systems in Kauf genommen, weil erkannt wurde, dass dies keinen nennenswerten Einfluss auf die Qualität und Reproduzierbarkeit des Kochergebnisses hat und das System hierdurch vereinfacht und Rechenkapazität gespart werden kann. Dieser Vorteil trifft auch mindestens auf die folgenden zwei Ausführungsformen zu.

In einer Ausführungsform des Verfahrens und/oder einer Konfiguration der Steuerungseinrichtung ist vorgesehen, dass die Steuerungseinrichtung von dem Fest-Modus zurück in den Temperaturregelungs-Modus wechselt, wenn die Ist-Temperatur die vordefinierte Mindesttemperatur unterschreitet oder die vordefinierte Höchsttemperatur überschreitet. Zusätzlich ist in einer Ausgestaltung vorgesehen, dass die Steuerungseinrichtung von dem Fest-Modus zurück in den Temperaturregelungs-Modus wechselt, wenn eine Änderung der Soll-Temperatur erfolgt.

In einer Ausführungsform des Verfahrens und/oder einer Konfiguration der Steuerungseinrichtung ist vorgesehen, dass im Temperaturregelungs-Modus die dem Heizelement zugeführte, elektrische Energie auf den Wert Null (P_{0%}) gesteuert wird, wenn die Ist-Temperatur die vordefinierte Höchsttemperatur überschreitet, und/oder die dem Heizelement zugeführte, elektrische Energie auf einen Aufheiz-Wert oder einen maximal möglichen Wert (P_{100%}) angehoben wird, wenn die Ist-Temperatur die vordefinierte Mindesttemperatur unterschreitet. Ein Aufheiz-Wert liegt zwischen dem Wert Null (P_{0%}) und dem maximal möglichen Wert (P_{100%}).

In einer Ausführungsform des Verfahrens und/oder einer Konfiguration der Steuerungseinrichtung ist vorgesehen, dass ein Siede-Stadium-Kriterium überprüft wird, um das festgelegte Siede-Stadium zu detektieren, wobei das Siede-Stadium-Kriterium mindestens eine vordefinierte Bedingung umfasst. Nur eine Bedingung kann also bereits ausreichen. Vorzugsweise gibt es jedoch mehrere Bedingungen, insbesondere jedoch nicht mehr als acht Bedingungen.

In einer Ausgestaltung ist das Siede-Stadium-Kriterium so festgelegt, dass das Siede-Stadium-Kriterium ausschließlich anhand der Ist-Temperatur oder den Messdaten des Temperatursensors überprüft werden kann, also anhand der von dem Temperatursensor gelieferten vorzugsweise zeitaufgelösten Signale zum Erfassen der Ist-Temperatur.

In einer Ausführungsform umfasst das Siede-Stadium-Kriterium folgende Bedingung: eine Steigung (ΔT_{I}/Δₜ) der Ist-Temperatur (T_{I}) über die Zeit (t) fällt unter einen vordefinierten Steigungs-Schwellwert. Eine Steigung ist eine Differenz von zwei Ist-Temperaturen über die Zeitdifferenz der Messung dieser zwei Ist-Temperaturen. Eine Steigung entspricht der ersten Ableitung einer Funktion T_{I}(t) der Ist-Temperatur in Abhängigkeit von der Zeit. In einer Ausgestaltung ist die Ist-Temperatur (T_{I}) ein gleitender Mittelwert. Ein gleitender Mittelwert bildet einen Mittelwert über mehrere Signale der von dem Temperatursensor gemessenen Ist-Temperatur, um die Ist-Temperatur für die Überprüfung des Siede-Stadium-Kriteriums bereitzustellen. Vorzugsweise beträgt der Zeitraum, über den der gleitende Mittelwert gemittelt wird, mindestens 5 Sekunden und/oder höchstens 1 Minute, besonders bevorzugt 0,5 Minuten. Probleme durch Messungenauigkeiten und anderen Schwankungen durch äußere Einflüsse können so vorgebäugt und ein besonders zuverlässiges Erkennen des Siede-Stadiums ermöglicht werden.

In einer Ausführungsform beträgt der vordefinierte Steigungs-Schwellwert mindestens 0,2 °C/Minute und/oder höchstens 5 °C/Minute beträgt, besonders bevorzugt ungefähr 0,5 °C/Minute. Ein besonders zuverlässiges Detektieren eines Siede-Stadiums der Speise kann so erzielt werden.

In einer Ausführungsform umfasst das Siede-Stadium-Kriterium folgende Bedingung, wenn eine Siede-Soll-Temperatur, die kleiner als 100°C beträgt, hinterlegt ist: der Betrag einer Differenz zwischen der Ist-Temperatur und der Soll-Temperatur wird für einen vordefinierten Zeitraum nicht größer als mindestens 1°C und/oder höchstens 5°C, besonders bevorzugt nicht größer als ungefähr 2°C. Mit anderen Worten wird ein symmetrisches, mitlaufendes Toleranzband um die Soll-Temperatur vorgesehen, und die Bedingung des Siede-Stadium-Kriteriums ist erfüllt, wenn der Ist-Temperaturwert für den vordefinierten Zeitraum das Toleranzband nicht verlässt. Insbesondere kann diese Bedingung mit einer Oder-Verknüpfung zusätzlich zu der vorhergehend beschriebenen Bedingung mit der Steigung vorgesehen werden. Eine noch zuverlässigere Erkennung des Siede-Stadiums kann so ermöglicht werden.

In einer Ausführungsform beträgt der vordefinierte Zeitraum mindestens 0,5 Minuten und/oder höchstens 10 Minuten, besonders bevorzugt ungefähr eine Minute.

In einer Ausführungsform beträgt ein Taktzyklus mindestens 1 Sekunde, bevorzugt 3 Sekunden, besonders bevorzugt mindestens 5 Sekunden, und/oder höchstens 30 Sekunden, besonders bevorzugt höchstens 10 Sekunden. Vorzugsweise beträgt der Taktzyklus genau 5 Sekunden. Insbesondere wird der Taktzyklus im Fest-Modus angewendet. Eine Überprüfung beispielsweise der Ist-Temperatur gegenüber einer oder mehrerer Temperaturgrenzen erfolgt dann regelmäßig in einem zeitlichen Abstand des Taktzyklus. Auch hier wird eine langsame Reaktionszeit des Systems in Kauf genommen, weil erkannt wurde, dass dies keinen nennenswerten Einfluss auf die Qualität und Reproduzierbarkeit des Kochergebnisses hat und das System hierdurch vereinfacht und Rechenkapazität gespart werden kann.

In einer Ausführungsform ist vorgesehen, dass in dem Fest-Modus der Steuerungseinrichtung der festgelegte Wert der dem Heizelement zugeführten, elektrischen Energie von der Soll-Temperatur, einer Benutzereingabe oder einem digitalen Rezept, insbesondere von einem Rezeptschritt des digitalen Rezepts, abhängig ist. Insbesondere kann durch die Benutzereingabe oder ein digitales Rezept ein gewünschter Siede-Zustand vorgegeben oder ausgewählt werden, auf Basis dessen dann der entsprechende, festgelegte Wert der elektrischen Energie für das Heizelement zur Erzielung dieses Siede-Zustands von der Steuerungseinheit genutzt wird. Ein reproduzierbares Kochergebnis kann auf diese Weise besonders zuverlässig mit einem System erzielt werden, dass eine reduzierte Komplexität aufweist.

In einer Ausführungsform ist vorgesehen, dass in dem Fest-Modus der Steuerungseinrichtung der festgelegte Wert der dem Heizelement zugeführten, elektrischen Energie von einer Benutzereingabe oder einem digitalen Rezept, insbesondere von einem Rezeptschritt des digitalen Rezepts, vorgegeben wird. Für Benutzer wird auf diese Weise eine Möglichkeit geschaffen, auch angesichts spezieller Umgebungsbedingungen einen festgelegten Wert der elektrischen Energie für das Heizelement vorzugeben, die an diese speziellen Umgebungsbedingungen zur Erzielung des gewünschten Siede-Zustands angepasst sind. Ein digitales Rezept oder ein Rezeptschritt eines digitalen Rezepts können auf diese Weise direkt und gezielt den gewünschten Siede-Zustand bewirken. Ein reproduzierbares Kochergebnis kann auf diese Weise besonders zuverlässig mit einem System erzielt werden, dass eine reduzierte Komplexität aufweist.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen und offenbarten Aspekten der Erfindung kombiniert werden, sofern nichts Gegenteiliges angegeben wird. Die beanspruchten Schutzbereiche sind nicht auf die Ausführungsbeispiele beschränkt.

Es zeigen:
- Figur 1:: Schematische Darstellung einer Küchenmaschine;
- Figur 2:: Darstellung eines schematischen Ablaufdiagramms;
- Figur 3:: Darstellung eines Messdiagramms;
- Figur 4:: Darstellung eines schematischen Ablaufdiagramms gemäß eines Ausführungsbeispiels.
- Figur 5:: Darstellung eines schematischen Ablaufdiagramms gemäß eines weiteres weiteren Ausführungsbeispiels.

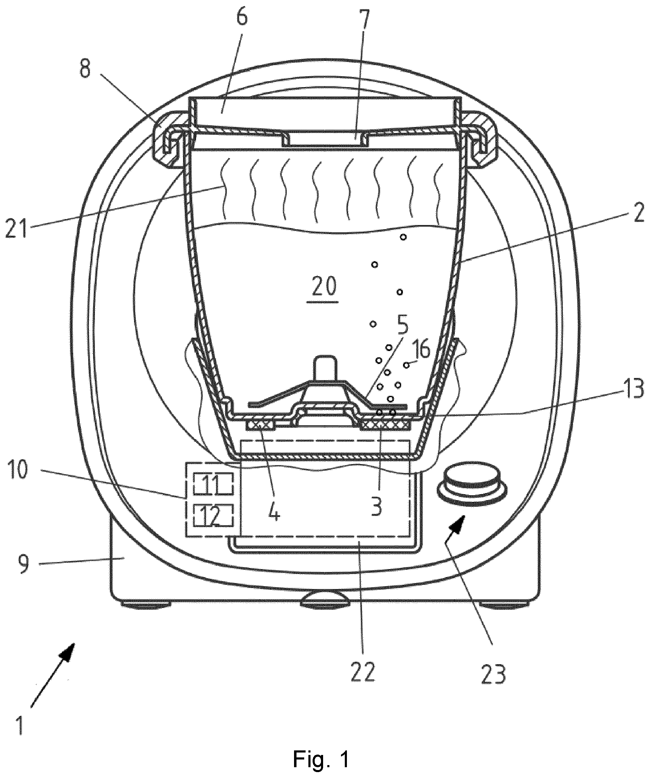

Die Figur 1 zeigt eine Küchenmaschine 1 mit einem Topf 2 zum Aufnehmen einer Speise 20, die flüssige Bestandteile enthält oder flüssig ist. Insbesondere ist die Speise 20 Wasser. Der Topf 2 kann durch einen Deckel 6 mit einer Deckelöffnung 7 abgedeckt werden. Eine nicht dargestellte Öffnungsabdeckung kann vorgesehen werden, um die Deckelöffnung 7 lose abzudecken, so dass stets Dampf 21 aus dem Topf 2 austreten kann. Der Deckel 6 kann mithilfe einer Verriegelung 8 auf dem Topf verriegelt werden. Ein drehbares Werkzeug 5 zum Zerkleinern und/oder Mischen kann optional am Topfboden 13 vorgesehen sein. Ein Gehäuse 9 der Küchenmaschine 1 nimmt den Topf 2 stabil auf. Ein Display 22 und eine Benutzerschnittstelle 23 ermöglichen die Wechselwirkung mit einem Benutzer, insbesondere zum Tätigen einer Benutzereingabe zum Wechseln oder Aktivieren eines Fest-Modus zum Halten einer dem Heizelement 3 zugeführten, elektrischen Energie auf einem festgelegten Wert in Abhängigkeit von einem gewünschten Siede-Stadium gemäß der Benutzereingabe. Eine Steuerungseinrichtung 10 mit einem Prozessor 11 und einem Speicher 12 sind vorgesehen, um die Küchenmaschine zu steuern. Zumindest ein Teil der Steuerungseinrichtung 10 ist in einer Ausgestaltung in eine externe Computer-Einheit ausgelagert. Insbesondere an einer Unterseite des Topfbodens 13, der normalerweise nicht mit einer Speise in Kontakt kommt, sind ein Heizelement 3 und ein Temperatursensor 4 angeordnet, bevorzugt ungefähr mittig zwischen einem Mittelpunkt des Topfbodens 13 und einem Außenumfang. Vorzugsweise sind das Heizelement 3 und/oder der Temperatursensor 4 unmittelbar mit dem Topf 2 verbunden, bevorzugt mit dem Topfboden 13. Ein besonders effizientes Erhitzen bzw. ein besonders präzises Messen können so ermöglicht werden. Vorzugsweise sind das Heizelement 3 und der Temperatursensor 4 gegenüberliegend auf beiden Seiten des Mittelpunktes des Topfbodens angeordnet, um ein besonders präzises Messen zu ermöglichen.

Die Speise 20 in dem Topf 2 der Fig. 1 befindet sich in einem beginnenden Siede-Stadium, das als leises Sieden bezeichnet werden kann. Neben der Bildung von Dampf 21 werden kleine Bläschen 16 insbesondere im Bereich des Heizelements 3 sichtbar und steigen vor dort aus an die Oberfläche, weil der Topfboden 13 im Bereich des Heizelements 3 die höchste Temperatur aufweist. Die Speise 20 hat hingegen insgesamt noch nicht die Siedetemperatur erreicht. Dieses Siedestadium von Wasser ist beispielsweise geeignet für die Zubereitung von z.B. Würstchen, Knödeln oder pochierten Eiern in diesem leise siedendem Wasser 20, weil hierdurch die Konsistenz erhalten bleiben kann.

Der Topf 2 ist aus Glas oder Metall, insbesondere Edelstahl, und/oder hat eine Dicke von 0,5 bis 1,0 mm. Der Durchmesser des Topfes 2 liegt bevorzugt zwischen 12 cm und 17 cm. Insbesondere hat der Topfboden 13 einen kleineren Durchmesser (z.B. 11 cm bis 14 cm) als der Topf 2 an der Oberseite (z.B. 15 bis 17 cm). Vorzugsweise handelt es sich bei dem Temperatursensor 4 um einen Thermistor vorzugsweise mit negativem Temperaturkoeffizienten.

Beim normalen Erhitzen einer flüssigen Speise 20 in dem Topf 2 unterhalb des Siedepunktes, also ohne Dampfbildung, bewirkt das Zuführen von Wärmeleistung durch das Heizelement 3 einen Anstieg der Temperatur in der Speise 20. Wenn der Siedepunkt erreicht wird, gleicht ein erster Teil der zugeführten Wärmeleistung Verluste aus abfließender Wärme aus und ein optionaler zweiter Teil der zugeführten Wärmeleistung wird nahezu vollständig für eine Phasenumwandlung von flüssig in dampfförmig verbraucht, während die Temperatur im Wesentlichen konstant bleibt.

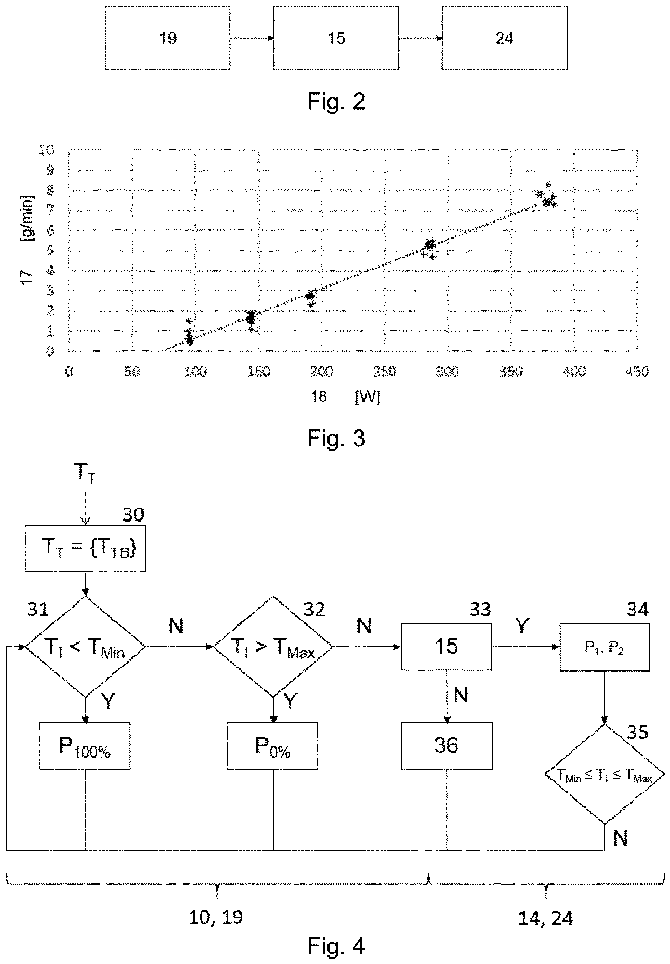

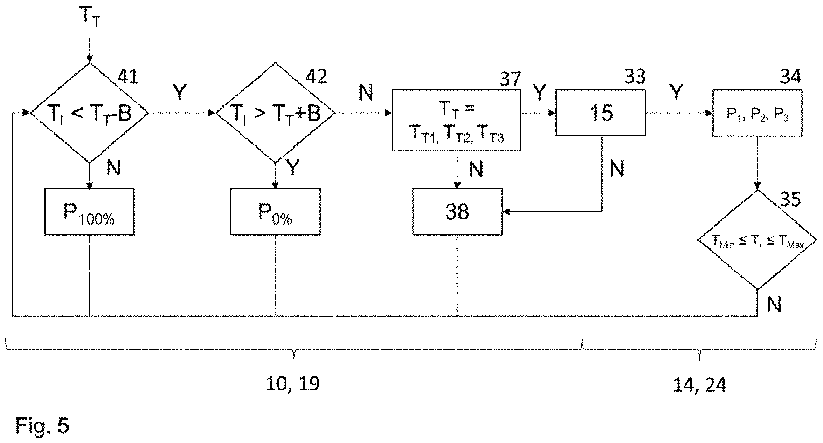

Figur 2 zeigt ein vereinfachtes Ablaufdiagramm, das durch eine Küchenmaschine, insbesondere der Küchenmaschine der Fig. 1, umgesetzt werden kann. Zunächst erfolgt eine Temperaturregelung in einem Temperaturregelungs-Modus 19. Wenn ein festgelegtes Siede-Stadium mithilfe mindestens eines Siede-Stadium-Kriteriums 15 detektiert wurde, wird von dem Temperaturregelungs-Modus 19 in einen Fest-Modus 24 gewechselt. Durch die in Abhängigkeit von der Soll-Temperatur T_{T} festgelegten, elektrischen Energie, die dem Heizelement im Fest-Modus 24 konstant zugeführt wird, kann besonders zuverlässig das gewünschte Siede-Stadium wie z.B. ein leises Sieden durch einen Wert P₁, ein normales Kochen durch einen Wert P₂ oder ein starkes Kochen durch einen Wert P₃ erhalten werden. Die Werte P₁, P₂, P₃ werden im Folgenden näher erläutert und anhand der Fig. 4 und 5 illustriert.

Im Temperaturregelungs-Modus 19 wird die Ist-Temperatur T_{I} durch Einstellen der dem Heizelement 3 zugeführten, elektrischen Energie (insbesondere der elektrischen Leistung in Watt) der Soll-Temperatur T_{T} angenähert. Bei einer Temperaturregelung bleibt die dem Heizelement 3 zugeführte, elektrische Energie nicht über den gesamten Zeitraum im Temperaturregelungs-Modus 19 konstant. Im Fest-Modus 24 hingegen wird die dem Heizelement 3 zugeführte, elektrische Energie für den gesamten Zeitraum im Fest-Modus 24 auf einem konstanten Wert (z.B. P₁, P₂ oder P₃ in Fig. 4 und 5) gehalten. Dieser konstante Wert hängt von der Soll-Temperatur T_{T} ab, insbesondere gemäß einer vordefinierten Zuordnung.

In einer Ausgestaltung sind (in der Steuerungseinrichtung 10) die konstanten Werte (z.B. P₁, P₂ oder P₃ in Fig. 4 und 5) des Fest-Modus 24 derart vordefiniert und/oder werden derart Siede-Soll-Temperaturen T_{Ti} oder Siede-Soll-Temperaturbereichen T_{TB} zugeordnet, dass folgendes gilt: jeder konstante Wert führt zu einem jeweiligen Zustand von Wasser, der bei der Siede-Soll-Temperatur T_{Ti} oder in dem Siede-Soll-Temperaturbereichen T_{TB} bei Normaldruck (ca. 1 bar Umgebungsdruck) gewünscht, erwartet und/oder planmäßig ist. Wenn die Soll-Temperatur einem der Siede-Soll-Temperaturen T_{Ti} entspricht oder in einen der Siede-Soll-Temperaturbereiche T_{TB} fällt, wird ein solcher Zustand auf für die vorliegende Speise in dem aktuellen Speisenzubereitungsvorgang gewünscht, erwartet oder geplant. Weil bei Auswählen, der Eingabe oder dem Einstellen der Soll-Temperatur durch den Benutzer oder ein digitales Rezept oder der Benutzereingabe bezüglich eines gewünschten Siede-Stadiums viele Umgebungseinflüsse wie z.B. Höhe über dem Meeresspiegel, Güte der Durchmischung der Speise oder Verschmutzungsgrad des Topfes nicht berücksichtigt werden und zu Fehlern beim herkömmlichen Temperaturregelvorgang führen können, wird durch den konstanten Wert (z.B. P₁, P₂ oder P₃ in Fig. 4 und 5) für die Zuführung einer elektrischen Energie zum Heizelement ein reproduzierbares Kochergebnis besonders zuverlässig und mit einem wenig komplexen System erzielt.

Die Figur 3 zeigt eine Messung einer Dampfrate 17 in Abhängigkeit von der Heizleistung 18 beim Kochen von Wasser mit der Küchenmaschine der Fig. 1, wobei die Messpunktwolken aus Einzelmessungen, die als "+" eingetragen sind, unter Variation des Füllstandes im Topf 2 und der Drehzahl des Werkzeugs 5 resultieren. Der Füllstand und die Drehzahl zeigen keine messbare Korrelation zur Dampfrate, die als ein Indikator für den Siede-Stadiums herangezogen werden kann. Der Schnittpunkt einer Regressionsgeraden (siehe gestrichelte Linie durch die Punktwolke in Fig. 3) einer linearen Einfachregression mit der x-Achse liefert einen experimentell ermittelten Wärmeverlust im Siedezustand.

Der konstante Wert (P₁, P₂, P₃) für die dem Heizelement 3 zuzuführende elektrische Energie ist insbesondere ein Leistungswert, ein Stromstärkenwert oder ein Spannungswert, oder kann mithilfe einer Pulsansteuerung über ein vordefiniertes Zeitfenster, bevorzugt 3 Sekunden, realisiert werden. Vorzugsweise ist der Wert für die dem Heizelement 3 zuzuführende elektrische Energie eine Führungsgröße und es findet eine Regelung der dem Heizelement 3 zuzuführenden Energie statt, um eine näherungsweise konstante Wärmezufuhr durch das Heizelement 3 gemäß der Führungsgröße zu erhalten. Wie oben erläutert kann der konstante Wert des Fest-Modus 24 so beschrieben werden, dass ein erster Teil der zugeführten Wärmeleistung Verluste aus abfließender Wärme ausgleicht und ein optionaler zweiter Teil der zugeführten Wärmeleistung nahezu vollständig einer Phasenumwandlung von flüssig in dampfförmig dient, während die Temperatur im Wesentlichen konstant bleibt.

Insbesondere ist der Wert P₁ für ein leises Sieden so festgelegt, dass der zweiter Teil der zugeführten Wärmeleistung für die Phasenumwandlung ungefähr Null ist (oder höchstens zu einer niedrigen Dampfrate von ungefähr 2 g/Minute führt), so dass hauptsächlich Wärmeverluste durch den ersten Teil der zugeführten Wärmeleistung ausgeglichen werden. Die flüssige Speise verhält sich dann ungefähr wie Wasser bei Normaldruck mit einer Temperatur von knapp unterhalb von 100°C. Vorzugsweise ist der Wert P₁ so festgelegt, dass eine Dampfrate von durchschnittlich mindestens 0,5 und/oder höchstens 3 g/Minute, bevorzugt ungefähr 1 g/Minute, erzeugt wird. Insbesondere ist der Wert P₁ einer Siede-Soll-Temperatur (T_{T1}), z.B. 98°C zugeordnet oder mehreren Siede-Soll-Temperaturen, z.B. 95°C, 96°C, 97°C, 98°C und 99°C zugeordnet. Es ist auch in einer Ausgestaltung vorgesehen, dass der Wert P₁ einem Siede-Soll-Temperaturbereichen T_{TB} von weniger als 100°C und/oder größer als 95°C zugeordnet ist. Bei dem Wert P₁ kommt zu einer Bildung von Dampf 22 und kleinen Bläschen 16 (vgl. Fig. 1) insbesondere im Bereich des Heizelements 3, jedoch noch keine nennenswerte Bildung von großen, sichtbaren und laut hörbaren Blasen, die nahezu über die gesamte, flüssige Speise 20 im Topf 2 verteilt sind. Z.B. ist der Wert P₁ dann eine elektrische Leistung von 100 W.

Insbesondere ist der Wert P₂ für ein normales Kochen so festgelegt, dass der zweiter Teil der zugeführten Wärmeleistung für die Phasenumwandlung so groß ist, dass Wärmeverluste durch den ersten Teil der zugeführten Wärmeleistung ausgeglichen werden und der zweite Teil der zugeführten Wärmeleistung zu einer Phasenumwandlung mit gut sichtbaren und hörbaren Blasen führt, die vom Topfboden zur Oberfläche der flüssigen Speise aufsteigen und dort zerplatzen. Vorzugsweise ist der Wert P₂ so festgelegt, dass eine Dampfrate von durchschnittlich mindestens 4 und/oder höchstens 6 g/Minute, bevorzugt ungefähr 5 g/Minute, erzeugt wird. Insbesondere ist der Wert P₂ einer Siede-Soll-Temperatur (T_{T2}), z.B. 100°C zugeordnet oder mehreren Siede-Soll-Temperaturen, z.B. 100°C, 101°C, 102°C, 103°C und 104°C zugeordnet. Es ist auch in einer Ausgestaltung vorgesehen, dass der Wert P₂ einem Siede-Soll-Temperaturbereichen T_{TB} von mindestens 100°C und/oder höchstens 104°C zugeordnet ist. In einer Ausgestaltung entspricht der Wert P₂ mindestens dem zweifachen von dem Wert P₁ und/oder der Wert P₂ ist geringer als das Vierfache des Werts P₁. Z.B. ist der Wert P₂ eine elektrische Leistung von 300 W.

Insbesondere ist der Wert P₃ für ein starkes Kochen so festgelegt, dass der zweiter Teil der zugeführten Wärmeleistung für die Phasenumwandlung so groß ist, dass Wärmeverluste durch den ersten Teil der zugeführten Wärmeleistung ausgeglichen werden und der zweite Teil der zugeführten Wärmeleistung zu einer Phasenumwandlung mit gut sichtbaren und hörbaren Blasen führt, die vom Topfboden zur Oberfläche der flüssigen Speise aufsteigen und dort zerplatzen. Vorzugsweise ist der Wert P₃ so festgelegt, dass eine Dampfrate von durchschnittlich mindestens 6 und/oder höchstens 9 g/Minute, bevorzugt ungefähr 7,5 g/Minute, erzeugt wird. Insbesondere ist der Wert P₃ einer Siede-Soll-Temperatur (T_{T3}), z.B. 105°C zugeordnet oder mehreren Siede-Soll-Temperaturen, z.B. 105°C, 106°C, 107°C, 108°C und 109°C zugeordnet. Es ist auch in einer Ausgestaltung vorgesehen, dass der Wert P₁ einem Siede-Soll-Temperaturbereichen T_{TB} von mindestens 105°C und/oder höchstens 109°C zugeordnet ist. In einer Ausgestaltung entspricht der Wert P₃ mindestens dem dreifachen von dem Wert P₁ und/oder ist größer als der Wert P₂. Z.B. ist der Wert P₃ dann eine elektrische Leistung von 400 W.

Figur 4 zeigt ein Ablaufdiagramm gemäß einer beispielhaften Ausgestaltung der Erfindung. Auf Basis einer Soll-Temperatur T_{T}, die der Steuerungseinrichtung 10 (z.B. durch eine Eingabe eines Benutzers oder gemäß eines Rezeptschrittes eines digitalen Rezepts) vorliegt, erfolgt eine Temperaturregelung, insbesondere in einem Temperaturregelungs-Modus 19 durch die Steuerungseinrichtung 10.

In Schritt 30 wird überprüft, ob die Soll-Temperatur T_{T} in einem Siede-Soll-Temperaturbereich T_{TB} liegt. Der Siede-Soll-Temperaturbereich T_{TB} wird bevorzugt durch eine untere Bereichsgrenze von 98°C und/oder eine oberen Bereichsgrenze von 105°C begrenzt. Hierdurch wird erkannt, wenn eine Soll-Temperatur vorliegt, für die der Fest-Modus 24 vorgesehen ist.

Wenn die Bedingung von Schritt 30 nicht erfüllt ist, wird eine herkömmliche Temperaturregelung durchgeführt, auf die im Zusammenhang mit Fig. 5 noch genauer eingegangen werden wird. Falls die Bedingung von Schritt 30 erfüllt ist, wird der Schritt 31 durchgeführt.

In Schritt 31 wird geprüft, ob die Ist-Temperatur T_{I} kleiner als die Mindesttemperatur T_{Min} (bevorzugt 91°C) ist. Falls ja (Y), wird das Heizelement 3 mit maximaler, elektrischer Leistung P100% (insbesondere 900 bis 1000 W) mit elektrischer Energie versorgt. Falls nein (N), wird mit Schritt 32 fortgesetzt.

In Schritt 32 wird geprüft, ob die Ist-Temperatur T_{I} größer als die Höchsttemperatur T_{Max} (bevorzugt 110°C) ist. Falls ja (Y), wird die Energieversorgung des Heizelementes 3 gestoppt, also Leistung P0% auf Null eingestellt. Wenn z.B. die gesamte Flüssigkeit verdampft ist, kann es zu diesem Fall kommen. Beim gewöhnlichen Erhitzen wird die Prüfung in der Regel das Ergebnis Nein (N) ergeben, so dass mit Schritt 33 fortgesetzt wird.

Dadurch, dass in Schritt 31 bereits bei einer Ist-Temperatur T_{I} größer als bevorzugt 91°C zu Schritt 32 und dann in der Regel gleich weiter zu Schritt 33 übergangen wird, kann vermieden werden, dass z.B. in den Bergen auf einer Höhe, in der Wasser bereits bei 91°C kocht, oder aus anderen umgebungsbedingten Ursachen, die Bedingung des Schritts 32 gar nicht erfüllt werden kann und folglich nicht in den Fest-Modus 24 gewechselt wird.

In Schritt 33 wird das Siede-Stadium-Kriterium 15 geprüft, das ebenfalls anhand des anderen Ausführungsbeispiels der Fig. 5 näher erläutert wird und analog in diesem Ausführungsbeispiel umgesetzt ist.

Wenn das Siede-Stadium-Kriterium 15 nicht erfüllt ist, wird in Schritt 36 das Heizelement 3 entweder mit maximaler Leistung P_{100%} versorgt, weil das Siede-Stadium noch nicht erreicht zu sein scheint, oder es wird eine Fein-Einstellung der dem Heizelement 3 zuzuführenden Energie umgestellt, um die Soll-Temperatur T_{T} noch präziser anzunähern. Bei einer solchen Fein-Einstellung sind auch elektrische Leistungen zwischen 0% und 100% der maximalen Leistung möglich. Insbesondere für zur Fein-Einstellung eine Fuzzy-Logik eingesetzt.

Wenn das Siede-Stadium-Kriterium 15 erfüllt ist, wird in den Fest-Modus 24 gewechselt und im Schritt 34 in Abhängigkeit von der Soll-Temperatur T_{T} - und/oder einer Benutzereingabe, eines digitalen Rezeptes und/oder eines Rezeptschrittes - einer von mehreren festgelegter Werten P₁, P₂ für die elektrische Leistung für das Heizelement 3 durch die Siedeerkennungseinheit (14) ausgewählt, so dass eine konstante Wärmezufuhr durch das Heizelement 3 erzeugt wird. Konkret wird das Heizelement 3 mit der elektrischen Leistung P₁ (z.B. 100 W) angesteuert, die Soll-Temperatur T_{T} gleich der Siede-Soll-Temperatur T_{T1} (z.B. 98°C) ist, weil der Wert P₁ in dem Speicher 12 der Steuerungseinrichtung 10 der Siede-Soll-Temperatur T_{T1} zugeordnet ist. Wenn die Soll-Temperatur T_{T} gleich der Siede-Soll-Temperatur T_{T2} (z.B. 100°C) ist, wird das Heizelement 3 mit der elektrischen Leistung P₂ (z.B. 300 W) angesteuert, der P1 in dem Speicher 12 der Steuerungseinrichtung 10 zugeordnet ist. Optional können noch weitere festgelegte Werte wie z.B. P₃ hinterlegt sein. Alternativ kann der festgelegte Wert für eine feste, konstante elektrische Leistung und/oder Hitzeabgabe des Heizelements 3 anhand einer fest hinterlegten Funktion oder durch Interpolation fest hinterlegter Referenzwerte in Abhängigkeit von der Soll-Temperatur T_{T}, die innerhalb des Siede-Soll-Temperaturbereichen T_{TB} liegt, ermittelt und angewendet werden.

Anschließend wird in Schritt 35 in einem Taktzyklus, der vorzugsweise 3 Sekunden beträgt, die Ist-Temperatur mit der Mindesttemperatur T_{Min} (bevorzugt 91°C) und der Höchsttemperatur T_{Max} (bevorzugt 110°C) verglichen. Wenn die Ist-Temperatur T_{I} diesen Temperaturbereich verlassen oder wenn sich die Soll-Temperatur T_{T} ändert (in Fig. 4 nicht gezeigt), wechselt die Steuerungseinreichung 10 zurück in den Temperaturregelungs-Modus 19 und fährt mit Schritt 31 fort. Wenn beispielsweise kaltes Wasser in den Topf 2 zugegeben wurde, wird auf diese Weise schnell wieder die Temperatur erhöht. Und falls die Flüssigkeit im Topf 2 vollständig verdampft ist, wird das Heizelement 2 über Schritt 32 auf Null (P_{0%}) gestellt. Weitere Details und Ausgestaltungen zu Schritt 35 sind bei dem Ausführungsbeispiel der Fig. 5 beschrieben, die auch für dieses Ausführungsbeispiel anwendbar sind.

Die Figur 5 zeigt ein Ablaufdiagramm gemäß einer anderen beispielhaften Ausführungsform der Erfindung. Gemäß einer Soll-Temperatur T_{T}, die der Steuerungseinrichtung 10 (z.B. durch eine Eingabe des Benutzers oder gemäß eines Rezeptschrittes eines digitalen Rezepts) vorliegt, erfolgt eine Temperaturregelung.

Anders als bei dem Ausführungsbeispiel der Fig. 4, durchlaufen alle Soll-Temperatur T_{T} die Schritte 41 und 42, vorzugsweise auch die Schritte 37 und 38. Alle Soll-Temperatur T_{T} beinhalten auch Soll-Temperaturen weit unterhalb des Siedepunkts von z.B. 50 °C. Soll-Temperaturen T_{T}, die vordefinierten Siede-Soll-Temperaturen T_{T1}, T_{T2}, T_{T3}, T_{Ti} entsprechen oder innerhalb eines Siede-Soll-Temperaturbereichs T_{TB} fallen, werden also gemeinsam mit allen anderen Soll-Temperaturen T_{T}, welche nicht einer der vordefinierten Siede-Soll-Temperaturen mehreren vordefinierten Siede-Soll-Temperaturen T_{T1}, T_{T2}, T_{T3}, T_{Ti} entsprechen oder innerhalb eines Siede-Soll-Temperaturbereichs T_{TB} fallen, durch die Schritte 41 und 42, vorzugsweise auch die Schritte 37 und 38, verarbeitet. Dies reduziert die Komplexität des Systems.

In Schritt 41 wird überprüft, ob die Ist-Temperatur T_{I} kleiner als die Soll-Temperatur T_{T} abzüglich eines Bereichs B zur Fein-Einstellung. Wenn die Bedingung von Schritt 41 nicht erfüllt ist (N) wird mit maximaler Leistung über das Heizelement 3 erhitzt. Insbesondere liegt B zwischen 5 und 15 °C. Vorzugsweise ist B = 10 °C. Wenn z.B. eine Soll-Temperatur T_{T} von 105 °C vorliegt, ist die Bedingung von Schritt 41 gerade mit Erreichen von 95 °C erfüllt (Y).

Wenn z.B. eine Soll-Temperatur T_{T} von 98 °C vorliegt, ist die Bedingung von Schritt 41 gerade mit Erreichen von 88 °C erfüllt (Y). Obwohl 88 °C noch nicht nahe der Siedetemperatur z.B. bei Normaldruck ist, wird dennoch im weiteren Verlauf des Diagramms mit einer vergleichsweise niedrigen Leistung P₁ geheizt werden. Aber dieser Nachteil einer langen Dauer zum Erreichen des gewünschten Siedezustands wird in Kauf genommen, um ein einfaches und zuverlässiges System zu realisieren.

In Schritt 42 wird überprüft, ob die Ist-Temperatur T_{I} größer als die Soll-Temperatur T_{T} zuzüglich eines Bereichs B zur Fein-Einstellung ist. Insbesondere liegt B zwischen 5 und 15 °C. Vorzugsweise ist B = 10 °C. Wenn z.B. eine Soll-Temperatur T_{T} von 105 °C vorliegt, ist die Bedingung von Schritt 41 erst dann nicht erfüllt, wenn eine Ist-Temperatur von 115 °C vorliegt (Y). Wie oben im Zusammenhang mit Fig. 4 erläutert, wird das Heizelement 3 auf Null-Leistung gesetzt, wenn die Bedingung des Schrittes 42 erfüllt ist, z.B. wegen des Verdampfens der gesamten Flüssigkeit im Topf 2.

Falls die Bedingung von Schritt 42 nicht erfüllt ist (N), was der Normalfall ist, wird in Schritt 37 die Soll-Temperatur T_{T} mit hinterlegten Siede-Soll-Temperaturen T_{T1}, T_{T2}, T_{T3} oder mit hinterlegten Siede-Soll-Temperaturbereichen T_{TB} verglichen und bei Erfüllen dieser Bedingung mit Schritt 33 fortgesetzt. In einer Ausgestaltung, in der die Soll-Temperatur T_{T} durch ein digitales Rezept oder einen Rezeptschritt so vorgegeben wird, dass die Soll-Temperatur T_{T} gezielt einem der hinterlegten Side-Soll-Temperaturen T_{T1}, T_{T2}, T_{T3} entspricht, wird hierdurch die Side-Soll-Temperatur T_{T1}, T_{T2}, T_{T3} des gewünschten Siede-Zustands vorgegeben. In einer alternativen Ausgestaltung wird der Wert P₁, P₂, P₃ von Schritt 34 direkt durch eine Benutzereingabe, ein digitales Rezept oder ein Rezeptschritt vorgegeben und mit Schritt 33 fortgesetzt.

Falls eine niedrigste Siede-Soll-Temperatur T_{T1} z.B. 98°C ist oder eine unteren Grenze eines Siede-Soll-Temperaturbereichs T_{TB} z.B. 95°C ist, wird die Bedingung von Schritt 37 z.B. bei einer Soll-Temperatur T_{T} von 93°C nicht erfüllt. Schritt 37 wurde erreicht, weil z.B. eine Ist-Temperatur T_{I} von 85°C vorliegt. In diesem Zahlenbeispiel erfolgt eine normale Temperaturregelung. Ein Wechseln in den Fest-Modus 24 ist auch nicht gewünscht. Weil die Bedingung des Schritts 37 nicht erfüllt ist (N), wird mit Schritt 38 fortgesetzt.

Schritt 38 kann entweder eine maximale Leistung P_{100%}, eine feste Leistung zum Aufheizen des Topfes 2 zwischen P_{0%} und P_{100%} (z.B. 50% der Maximalleistung für ein langsameres Annäheren der Soll-Temperatur) oder eine Fein-Einstellung der Leistung für das Heizelement 3 umfassen. Bevorzugt enthält Schritt 38 eine Logik zur Fein-Einstellung, insbesondere unter Verwendung einer Fuzzi-Logik. Dabei wird eine variabel, elektrische Leistung ermittelt, mit der das Heizelement 3 in Abhängigkeit von der Differenz von der Soll-Temperatur T_{T} zur Ist-Temperatur T_{I} angesteuert wird, vorzugsweise in einem Zeitfenster von ungefähr 3 Sekunden.

Wenn die Bedingung von Schritt 37 hingegen erfüllt ist und eine Soll-Temperatur T_{T} vorliegt, für die der Fest-Modus 24 eingerichtet worden ist, wird mit Schritt 33 fortgesetzt. Ein Wechsel in den Fest-Modus 24 findet dann statt.

In Schritt 33 wird geprüft ob das Siede-Stadium-Kriterium 15 erfüllt ist. Insbesondere ist eine erste Bedingung des Siede-Stadium-Kriteriums 15, dass eine Steigung ΔT_{I}/Δₜ der Ist-Temperatur T_{I} über die Zeit t unter einem vordefinierten Steigungs-Schwellwert DTs liegt. Hierzu wird vorzugsweise ein gleitender Mittelwert der Ableitung der Ist-Temperatur T_{I} über die Zeit t gebildet, vorzugsweise über einen Zeitraum von weniger als einer Minute. Insbesondere ist der vordefinierte Steigungs-Schwellwert DTs ungefähr 0,5 °C/Minute.

Falls eine Siede-Soll-Temperatur T_{T1} oder ein Siede-Soll-Temperaturbereich T_{TB} von unter 100°C hinterlegt ist, kann vorzugsweise eine zweite Bedingung des Siede-Stadium-Kriteriums 15 im Schritt 33 geprüft werden. Insbesondere ist dann eine Oder-Verknüpfung zwischen der zweiten Bedingung und der ersten Bedingung vorgesehen, so dass Schritt 33 erfüllt ist, wenn eine der beiden Bedingungen erfüllt ist. Insbesondere wird in der zweiten Bedingung geprüft, ob der Betrag (d.h., Vorzeichen immer >0) einer Differenz zwischen der Ist-Temperatur T_{I} und der Soll-Temperatur T_{T} für einen vordefinierten Zeitraum ZT nicht größer als 2°C ist. Vorzugsweise beträgt der vordefinierte Zeitraum ZT = 1 Minute.

Falls die Bedingung oder die Bedingungen des Schritt 33 noch nicht erfüllt sind, wird die Temperaturregelung über Schritt 38 fortgesetzt.

Falls die Bedingung oder die Bedingungen des Schritt 33 hingegen erfüllt sind, wird die in Schritt 37 identifizierte Siede-Soll-Temperatur T_{Ti} bzw. T_{T1}, T_{T2}, T_{T3} oder ein in Schritt 37 identifizierte Siede-Soll-Temperaturbereich T_{TB} insbesondere gemäß einer hinterlegten Zuordnung oder Zuordnungslogik der Siede-Erkennungseinheit 14 einem entsprechenden Wert P₁, P₂, P₃ zugeordnet. Alternativ oder ergänzend kann der Wert P₁, P₂, P₃ durch eine Benutzereingabe, ein digitales Rezept und/oder einen Rezeptschritt vorgegeben werden. Das Heizelement 3 wird dann in Schritt 34 gemäß dem zugeordneten Wert P₁, P₂, P₃ mit elektrischer Energie versorgt. Insbesondere ist der Wert die elektrische Leistung oder Soll-Leistung für das Heizelement 3. Das System befindet sich nun im Fest-Modus 24. Das Heizelement 3 gibt eine im Wesentlichen konstante Wärmeleistung an den Topf 2 ab.

Beispielsweise wird der oben spezifizierte Wert P₁ für ein leises Sieden der Siede-Soll-Temperatur T_{T1} = 98°C zugeordnet, die der aktuellen Soll-Temperatur T_{T} entspricht. Das Heizelement 3 wird dann mit konstant z.B. 100 W mit elektrischer Energie versorgt, wodurch normalerweise die zu erwartenden Wärmeverluste knapp unterhalb des Siedepunktes ausgeglichen und dieser gewünschte, leise Siedezustand aufrechterhalten wird.

In Schritt 35 wird in einem regelmäßigen Taktzyklus von wenigen Sekunden die Ist-Temperatur T_{I} mit einer unteren Grenze, der Mindesttemperatur T_{MIN} von Z.B. 91 °C, und/oder einer oberen Grenze, der Höchsttemperatur T_{MAX} von z.B. 110 °C, verglichen. Hierdurch wird erkannt, wenn die Ist-Temperatur T_{I} das Siede-Stadium verlässt. Wenn detektiert wird, dass die Ist-Temperatur T_{I} das Siede-Stadium verlässt, wird zurück in den Temperaturregelungs-Modus 19 gewechselt und die zuvor beschriebene Temperaturregelung fortgesetzt.

Insbesondere wird in Schritt 35 zusätzlich (mit einer Oder-Verknüpfung) geprüft, ob sich die Soll-Temperatur T_{T} verändert hat. Daher führt auch eine Änderung der Soll-Temperatur T_{T} z.B. durch den Benutzer oder einen Rezeptschritt eines digitalen Kochrezeptes dazu, dass zurück in den Temperaturregelungs-Modus 19 gewechselt wird. Wenn beispielsweise der Siedevorgang beendet werden soll, wird die Soll-Temperatur T_{T} auf Null, also P_{0%}, verändert. Das System wechselt dann vom Fest-Modus 24 in den Temperaturregelungs-Modus 19.

In einer alternativen Ausgestaltung wird das Ausführungsbeispiel der Fig. 4 so modifiziert, dass die Überprüfung T_{T} = {T_{TB}} des Schrittes 30 entfällt. Stattdessen wird in Schritt 31 die Und-verknüpfte Bedingung T_{T} ≥ T_{T1}, also dass die Soll-Temperatur TT größer oder gleich einer kleinsten Siede-Soll-Temperatur T_{T1} ist, hinzugefügt. Optional kann diese zusätzliche Bedingung ebenfalls analog in Schritt 32 hinzugefügt werden. Der separate Schritt 30 kann so entfallen und die Komplexität reduziert werden.

In allen oben erläuterten Ausführungsbeispielen ist die Steuerungseinrichtung, z.B. die Steuerungseinrichtung 10 der Küchenmaschine 1 der Fig. 1, so konfiguriert, dass in einem Temperaturregelungs-Modus 19 die Steuerungseinrichtung 10 auf Basis einer Soll-Temperatur T_{T} durch ein Einstellen einer dem Heizelement 3 zugeführten, elektrischen Energie in Abhängigkeit von der Ist-Temperatur T_{I} eine Temperaturregelung durchführen kann, damit sich die Ist-Temperatur T_{I} der Soll-Temperatur T_{T} annähert oder die Soll-Temperatur T_{T} erreicht. Insbesondere kann eine Soll-Temperatur T_{T} in einem Bereich von mindestens 37°C und/oder höchstens 121°C vorgegeben werden. Insbesondere sind eine begrenzte Anzahl definierter Soll-Temperaturen T_{T} hinterlegt, zwischen denen ausgewählt werden kann, um die Soll-Temperatur T_{T} der Steuerungseinrichtung 10 vorzugeben, z.B. 85°C, 90°C, 95°C, 98°C, 100°C, 105°C, 110°C, 120°C. Insbesondere kann keine kontinuierliche Soll-Temperatur eingestellt und vorgegeben werden. Insbesondere kann eine diskrete Soll-Temperatur eingestellt und vorgegeben werden.

Eine Siede-Erkennungseinheit 14 zum Detektieren eines festgelegten Siede-Stadiums der Speise 20 anhand eines Siede-Stadium-Kriteriums 15 ist vorgesehen und die Steuerungseinrichtung 10 ist so konfiguriert, dass die Steuerungseinrichtung 10 von dem Temperaturregelungs-Modus 19 in einen Fest-Modus 24 wechselt, wenn die Siede-Erkennungseinheit 14 das festgelegte Siede-Stadium detektiert, wobei die dem Heizelement 3 zugeführte, elektrische Energie in dem Fest-Modus 24 auf einen festgelegten Wert P₁, P₂, P₃ gehalten wird, der von der Soll-Temperatur T_{T} abhängig ist. Insbesondere ist die Siede-Erkennungseinheit 14 dabei ein Teil der Steuerungseinrichtung 10.

Die Leistungsregelung wird also nur in gewissen Temperaturbereichen um den Siedepunkt aktiviert und bei Verlassen dieser wieder auf Temperaturregelung umgestellt. Der Siedezustand wird z.B. daran erkannt, dass die gemessene Temperatur eine geringe Steigung hat oder für eine gewisse Zeit innerhalb eines gewissen Zieltemperaturbereichs verweilt. In einer Ausgestaltung sind folgenden Bedingungen für das Siede-Stadium-Kriterium 15 vorgesehen: Die insbesondere durch den Nutzer oder das digitale Rezept vorgegebenen Soll-Temperatur liegt zwischen 98°C und 105°C oder alternativ stimmt mit bestimmten Temperaturwerten wie z.B. 98°C, 100°C und 105°C überein. Die gemessene Ist-Temperatur ist größer oder gleich 91°C (um z.B. einen Siedepunkt von Wasser auf 2000 m Höhe von 93°C abzudecken) und kleiner 110°C. Die gemessene Ist-Temperatur hat ferner keine positive Steigung > 0,5 °C/min für 30 s. Optional kann eine weitere, insbesondere "und"-verknüpfte Bedingung lauten, dass die Heizleistung > 500 W ist. Eine Oder-verknüpfte Bedingung lautet ferner, dass die gemessene Ist-Temperatur für 1 min im Bereich +/- 2°C um die Soll-Temperatur liegt, insbesondere für Soll-Temperaturen <100°C (z.B. 98°C). Falls die Ist-Temperatur < 91°C (insbesondere länger als 30 s) oder >110 °C ist, wird von dem Fest-Modus wieder zurück in den Temperaturregelungs-Modus gewechselt. Optional, insbesondere mit einer Oder-Verknüpfung, kann vorgesehen werden, dass von dem Fest-Modus wieder zurück in den Temperaturregelungs-Modus gewechselt wird, wenn die Steigung > +6°C/min oder < -6°C/min beträgt, insbesondere über einen Zeitraum oder einem gleitenden Mittelwert der Ist-Temperatur über die Zeit von vorzugsweise 10 s. Ein Ereignis einer plötzlichen Zugabe eines kalten oder heißen Mediums kann auf diese Weise verbessert berücksichtigt werden.

Im Temperatur-Bereich des Siedens oder Kochens der flüssigen Speise oder Wasser wird die Temperaturregelung durch eine konstante Leistungszuführung bzw. Wärmezufuhr durch das Heizelement ersetzt. Das hierdurch erzielte Siede- bzw. Koch-Verhalten entspricht verbessert der typischen Benutzererwartung und erzeugt ein Koch-Verhalten im Topf 2, das dem erwarteten Kochen auf einem Herd in diesem Temperaturbereich bei Normaldruck ungefähr entspricht.

Die oben erläuterten Ausführungsbeispiele ermöglichen alle, ein reproduzierbares Kochergebnis und eine gewünschte Dampfrate besonders zuverlässig mit einem besonders einfachen, wenig komplexen System zu erzielen. Bei vielen Gerichten ergibt sich erst die richtige Konsistenz, wenn eine gewisse Menge Wasser kontrolliert verdampft wurde, z.B. bei Rotkohl.

## Patentansprüche

1. Verfahren zum Zubereiten einer Speise (20) in einem Topf (2) mithilfe einer Küchenmaschine (1), die den Topf (2), ein Heizelement (3) zum Erhitzen des Topfes (2) und/oder einer Speise (20) in dem Topf (2) und einen Temperatursensor (4) zum Ermitteln einer Ist-Temperatur (T_{I}) des Topfes (2) oder der Speise (20) in dem Topf (2) umfasst, mit folgenden Schritten:
- Durchführen einer Temperaturregelung durch eine Steuerungseinrichtung (10) in einem Temperaturregelungs-Modus (19) auf Basis einer Soll-Temperatur (T_{T}) durch ein Einstellen einer dem Heizelement (3) zugeführten, elektrischen Energie in Abhängigkeit von der Ist-Temperatur (T_{I}), so dass sich die Ist-Temperatur (T_{I}) der Soll-Temperatur (T_{T}) annähert oder die Soll-Temperatur (T_{T}) erreicht,
- Detektieren eines festgelegten Siede-Stadiums der Speise (20) durch eine Siede-Erkennungseinheit (14); und
- Wechseln von dem Temperaturregelungs-Modus (19) in einen Fest-Modus (24) der Steuerungseinrichtung (10), wenn die Siede-Erkennungseinheit (14) das festgelegte Siede-Stadium detektiert, wobei die dem Heizelement (3) zugeführte, elektrische Energie in dem Fest-Modus (24) auf einen festgelegten Wert (P₁, P₂, P₃) gehalten wird.

2. Verfahren nach dem vorhergehenden Anspruch, **gekennzeichnet durch** den Schritt:
- Prüfen, ob die Soll-Temperatur (T_{T}) mit einer von mehreren vordefinierten Siede-Soll-Temperaturen (T_{T1}, T_{T2}, T_{T3}, T_{Ti}) übereinstimmt oder in einen vordefinierten Siede-Soll-Temperaturbereich (T_{TB}) fällt.

3. Verfahren nach dem vorhergehenden Anspruch, **dadurch gekennzeichnet, dass** eine erste vordefinierte Siede-Soll-Temperatur (T_{T1}), die kleiner als 100°C ist, einem ersten Wert (P₁) für die dem Heizelement (3) zugeführte, elektrische Energie zugeordnet ist, und eine zweite vordefinierte Siede-Soll-Temperatur (T_{T2}), die größer oder gleich 100°C ist, einem zweiten Wert (P₂) für die dem Heizelement (3) zugeführte, elektrische Energie zugeordnet ist.

4. Verfahren nach einem der zwei vorhergehenden Ansprüche, **dadurch gekennzeichnet, dass** die mehreren vordefinierten Siede-Soll-Temperaturen (T_{Ti}) und/oder der vordefinierte Siede-Soll-Temperaturbereich (T_{TB}) nicht unter 95°C liegen.

5. Verfahren nach einem der vorhergehenden Ansprüche, **gekennzeichnet durch** den Schritt:
- Prüfen, ob die Ist-Temperatur (T_{I}) größer als eine vordefinierte Mindesttemperatur (T_{Min}) und/oder kleiner als eine vordefinierte Höchsttemperatur (T_{Max}) ist.

6. Verfahren nach dem vorhergehenden Anspruch, **dadurch gekennzeichnet, dass** die vordefinierte Mindesttemperatur (T_{Min}) zwischen 80°C und 91°C betragen und/oder die vordefinierte Höchsttemperatur (T_{Max}) größer als 105°C oder 110°C ist.

7. Verfahren nach einem der zwei vorhergehenden Ansprüche, **dadurch gekennzeichnet, dass** die Steuerungseinrichtung (10) von dem Fest-Modus (24) zurück in den Temperaturregelungs-Modus (19) wechselt, wenn die Ist-Temperatur (T_{I}) die vordefinierte Mindesttemperatur (T_{Min}) unterschreitet oder die vordefinierte Höchsttemperatur (T_{Max}) überschreitet.

8. Verfahren nach einem der drei vorhergehenden Ansprüche, **dadurch gekennzeichnet, dass** im Temperaturregelungs-Modus (19) die dem Heizelement (3) zugeführte, elektrische Energie auf den Wert Null (P_{0%}) gesteuert wird, wenn die Ist-Temperatur (T_{I}) die vordefinierte Höchsttemperatur (T_{Max}) überschreitet, und/oder die dem Heizelement (3) zugeführte, elektrische Energie auf einen Aufheiz-Wert oder einen maximal möglichen Wert (P_{100%}) angehoben wird, wenn die Ist-Temperatur (T_{I}) die vordefinierte Mindesttemperatur (T_{Min}) unterschreitet.

9. Verfahren nach einem der vorhergehenden Ansprüche, **dadurch gekennzeichnet, dass** ein Siede-Stadium-Kriterium (15) überprüft wird, um das festgelegte Siede-Stadium zu detektieren, wobei das Siede-Stadium-Kriterium (15) mindestens eine vordefinierte Bedingung umfasst.

10. Verfahren nach dem vorhergehenden Anspruch, **dadurch gekennzeichnet, dass** das Siede-Stadium-Kriterium (15) folgende Bedingung umfasst: eine Steigung (ΔT_{I}/Δₜ) der Ist-Temperatur (T_{I}) über die Zeit (t) fällt unter einen vordefinierten Steigungs-Schwellwert (DT_{S}).

11. Verfahren nach dem vorhergehenden Anspruch, **dadurch gekennzeichnet, dass** der vordefinierte Steigungs-Schwellwert (DT_{S}) mindestens 0,2 °C/Minute und/oder höchstens 5 °C/Minute beträgt.

12. Verfahren nach einem der drei vorhergehenden Ansprüche, **dadurch gekennzeichnet, dass** das bei einer Siede-Soll-Temperatur (T_{T1}), die kleiner als 100°C ist, das Siede-Stadium-Kriterium (15) folgende Bedingung umfasst: der Betrag einer Differenz zwischen der Ist-Temperatur (T_{I}) und der Soll-Temperatur (T_{T}) wird für einen vordefinierten Zeitraum (ZT) nicht größer als mindestens 1°C und/oder höchstens 5°C, insbesondere für einen vordefinierten Zeitraum (ZT) von mindestens 0,5 Minuten und/oder höchstens 10 Minuten.

13. Verfahren nach einem der vorhergehenden Ansprüche, **dadurch gekennzeichnet, dass** in dem Fest-Modus (24) der Steuerungseinrichtung (10) der festgelegte Wert (P₁, P₂, P₃) der dem Heizelement (3) zugeführten, elektrischen Energie von der Soll-Temperatur (T_{T}), einer Benutzereingabe oder einem digitalen Rezept abhängig ist oder vorgegeben wird.

14. Küchenmaschine (1), die so eingerichtet ist, dass die Küchenmaschine (1) das Verfahren gemäß einem der vorhergehenden Ansprüche durchführt.

15. Computerprogrammprodukt, umfassend Befehle, die bei der Ausführung des Programms des Computerprogrammprodukts durch einen Prozessor (11) diesen veranlassen, die Schritte des Verfahrens nach dem vorhergehenden Ansprüche 1 bis 13 auszuführen.
